(19) Europäisches Patentamt
European Patent Office
Office européen des brevets

(11) Publication number: **0 351 732 B1**

(12) **EUROPEAN PATENT SPECIFICATION**

(45) Date of publication of patent specification: **13.12.95**

(51) Int. Cl.[6]: **C08K 5/13**, C08L 67/02

(21) Application number: **89112957.9**

(22) Date of filing: **14.07.89**

(54) **Polyester composition**

(30) Priority: **18.07.88 JP 178324/88**

(43) Date of publication of application:
**24.01.90 Bulletin 90/04**

(45) Publication of the grant of the patent:
**13.12.95 Bulletin 95/50**

(84) Designated Contracting States:
**CH DE FR GB IT LI**

(56) References cited:
**EP-A- 0 185 981**
**EP-A- 0 285 102**
**GB-A- 2 009 768**
**GB-A- 2 091 273**

**DOCUMENTATION ABSTRACTS JOURNAL, CHEMICAL PATENTS INDEX, section A, week 9103, 20th March 1991, AN=91-019235/03, Derwent Publications Ltd, London, GB**

**CHEMICAL ABSTRACTS, vol. 93, no. 8, 25th August 1980, page 39, column 2, abstract no. 72857c, Columbus, Ohio, US**

(73) Proprietor: **TORAY INDUSTRIES, INC.**
**2-1, Nihonbashi-Muromachi 2-chome**
**Chuo-ku**
**Tokyo 103 (JP)**

(72) Inventor: **Karasawa, Hiroo**
**Toray Hokuenryo**
**13-1, Sonoyama 2-chome**
**Otsu-shi**
**Shiga 520 (JP)**
Inventor: **Kometani, Kiichi**
**E-3-5 Toray Shataku**
**82, Ikegamidai 1-chome**
**Midori-ku**
**Nagoya-shi**
**Aichi, 458 (JP)**
Inventor: **Nakamura, Kiyokazu**
**9-1, Sotoyama 2-chome**
**Minami-ku**
**Nagoya-shi**
**Aichi, 457 (JP)**

(74) Representative: **Kador & Partner**
**Corneliusstrasse 15**
**D-80469 München (DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).



Rank Xerox (UK) Business Services
(3.10/3.09/3.3.3)

JOURNAL OF POLYMER SCIENCE, POLYMER PHYSICS EDITION, vol. 22, no. 12, December 1984, pages 2063-2072, New York, US; D. GARCIA: "Heterogeneous nucleation of poly(ethylene terephthalate)"

## Description

### BACKGROUND OF THE INVENTION

#### (A) Field of the Invention

The present invention concerns a polyester resin composition having high crystallization rate and excellent moldability upon using molds at low temperature, with less reduction of molecular weight upon preparing and molding the resin composition, and of satisfactory melt degradation stability and hydrolysis resistance.

#### (B) Description of the prior Art

Thermoplastic polyesters have excellent mechanical property, as well as physical and chemical natures and, accordingly, they have been used in wide application use. Among them, several thermoplastic polyesters, for example, polyethylene terephthalate have particularly excellent properties but they have not yet been used so generally at present for the injection molding.

This is due to the fact that polyethylene terephthalate, in particular, involves a problem in view of the moldability in that it has slower crystallization rate as compared with other crystalline polymers and, therefore, not crystallized sufficiently in a mold at a low temperature from 50 to 95 °C which is usually used for injection molding, and so it cannot give a satisfactory molding product.

In view of the above, with an aim of improving moldability, various studies have been made on additives that can improve the crystallization rate of thermoplastic polyesters. For instance, there have been known compositions comprising thermoplastic polyesters to which an alkali metal salt of salicyclic acid is added as disclosed in Japanese Patent Publication (Kokai) 61-157556, or an alkali metal salt of phenol sulfonic acid as disclosed in Japanese Patent Publication (Kokai) 56-57825.

However, in these conventional compositions described above, not only crystallization rate of the polyesters can not be improved so much, but also molecular weight of polyesters is remarkably reduced upon melt molding or during production of resin compositions, and therefore only molding products of low mechanical property are obtained and in addition there has been the problem that hydrolysis resistance of the polyester is deteriorated if an additive having a relatively great effort for the improvement of the crystallization rate is added.

### SUMMARY OF THE INVENTION

Accordingly, the object of the present invention is to remarkably improve the crystallization rate of a thermoplastic polyester thereby improving the moldability, as well as provide a thermoplastic polyester of satisfactory mechanical property with less reduction in molecular weight upon melt molding or during production of resin compositions and less reduction in hydrolysis resistance.

The feature of the present invention for attaining the object is as described below.

A thermoplastic polyester composition comprising 100 parts by weight of a thermoplastic polyester and, added thereto, from 0.005 to 10 parts by weight of an additive which is a metal salt of a substituted phenol having at least one aromatic ring, at least one hydroxyl group in the form of a metal salt bonded to said aromatic ring and at least one further substituent in the form of a non-ionic group bonded to said aromatic ring, with the proviso that none of said further substituents contains any ionic group.

### PREFERRED EMBODIMENT OF THE INVENTION

The thermoplastic polyester used in the present invention is a polymer or copolymer obtained by polycondensation of a dicarboxylic acid, preferably an aromatic dicarboxylic acid having 8 to 20 carbon atoms, (or ester-forming derivative thereof) and a diol, preferably an aliphatic or cycloaliphatic diol having 2 to 10 carbon atoms, (or ester-forming derivative thereof) as the main ingredients.

As the dicarboxylic acid used herein, there can be mentioned aromatic dicarboxylic acids such as terephthalic acid, isophthalic acid, ortho-phthalic acid, 1,5-naphthalene dicarboxylic acid, 2,5-naphthalene dicarboxylic acid, 2,6-naphthalene dicarboxyluc acid, 2,7-naphthalene dicarboxylic acid, 2,2'-biphenyl dicarboxylic acid, 3,3'-biphenyl dicarboxylic acid, 4,4'-biphenyldicarboxylic acid, 4,4'-biphenylether dicarboxylic acid, 4,4′-diphenylmethane dicarboxylic acid, 4,4′-diphenylsulfone dicarboxylic acid, 4,4′-diphenyl isopropylidenedicarboxylic acid, 1,2-bis(phenoxy) ethane-4′,4″-dicarboxylic acid, 2,5-anthracene dicarboxylic

acid, 2,6-anthracene dicarboxylic acid, 4,4′-p-terphenylene dicarboxylic acid and 2,5-pyridine dicarboxylic acid; aliphatic dicarboxylic acids such as adipic acid, sebacic acid, azelaic acid, dodecanedioic acid and dimer acid; cycloaliphatic carboxylic acids such as 1,4-cyclohexane dicarboxylic acid, 1,3-cyclohexane dicarboxylic acid; or the ester-forming derivatives thereof, terephthalic acid being particularly preferred. A mixture of two or more of these dicarboxylic acids may also be used.

Further, as the diol ingredient, there can be mentioned aliphatic diols such as ethylene glycol, propylene glycol, butylene glycol, hexylene glycol, neopentyl glycol, 1,5-pentane glycol, decamethylene glycol, 2-methyl-1,3-propane diol, diethylene glycol and triethylene glycol; cycloaliphatic diols such as 1,4-cyclohexane dimethanol and cyclohexane diol, as well as mixtures thereof.

One or more of long-chained diols with a molecular weight of from 400 to 6,000, e.g., polyethylene glycol, polypropylene glycol or polytetramethylene glycol may be copolymerized if they are used in a small amount.

As examples for specific thermoplastic polyesters, there can be mentioned polyethylene terephthalate, polypropylene terephthalate, polybutylene terephthalate, polyethylene naphthalate, polybutylene naphthalate, polycyclohexane dimethylene terephthalate e.g. poly-1,4-cyclohexane dimethylene terephthalate and polyethylene-1,2-bis(phenoxy) ethane-4',4''-dicarboxylate, as well as copolyesters such as polyethylene isophthalate/terephthalate, polybutylene terephthalate/isophthalate and polybutylene terephthalate/decane dicarboxylate. Among such thermoplastic polyesters, polybutylene terephthalate, polycyclohexane dimethylene terephthalate, polyethylene naphthalate e.g. polyethylene-2,6-naphthalate or polyethylene terephthalate which is well-balanced in mechanical property, moldability, etc. are preferred.

Preferred thermoplastic polyesters used in the present invention have an intrinsic viscosity from 0.25 to 3.0 dl/g, particularly, 0.4 to 2.25 dl/g as measured in an o-chlorophenol solution at 25 °C.

Phenols, the starting materials of the metal salts which are the crystallization improver in the present invention, are those compounds having at least one aromatic ring, at least one hydroxyl group (phenolic hydroxyl group) bonded to the aromatic ring and at least one non-ionic group bonded to the aromatic ring.

As examples for the aromatic ring constituting the main skeleton, there may be mentioned, for example, aromatic hydrocarbons such as benzene, naphthalene, phenanthrene, anthracene and pyrene; heterocyclic aromatic rings such as pyridine, triazine, furan, quinoline, isoquinoline or 1,10-phenanthrene, as well as condensed ring systems containing aromatic rings such as indene, indole, benzofuran, fluorene or dibenzofuran.

It is necessary that the aromatic ring constituting the main skeleton contains at least one hydroxyl group (phenolic hydroxyl group) and at least one non-ionic group bonded thereto. These substituent groups including the hydroxyl group may be present in any number and bonded at any position of the aromatic ring.

The term non-ionic group means herein substituents not having any definite ionic bondings such as carboxylate salts, sulfonate salts, phosphate salts, ammonium salts, diazonium salts or thiocarboxylate salts.

As examples of the non-ionic groups, there can be mentioned the following groups (i) - (iv) :

(i) cyano group, nitro group, formyl group,
(ii) acyl group, sulfonyl group,
(iii) alkoxycarbonyl group, carboamide group, hydrocarbon group having 1 to 20 carbon atoms,
(iv) triazole group, oxazole group, thiazole group.

As specific examples for the acyl group in (ii) above, there can be mentioned acetyl, propionyl, benzoyl, naphthtoyl and toluoyl. Aliphatic acyl group or aromatic acyl groups with a molecular weight not greater than 170 are preferred, acetyl or benzoyl being particularly preferred.

As specific examples for the sulfonyl group in (ii) above, there can be mentioned methyl sulfonyl, ethyl sulfonyl, phenyl sulfonyl, toluyl sulfonyl or chlorophenyl sulfonyl. A substituted or not-substituted aromatic sulfonyl group is preferred, phenyl sulfonyl being most preferred.

As specific examples for the alkoxycarbonyl group, carboamide group and hydrocarbon group in (iii) above, there can be mentioned carbomethoxy, carboethoxy, carbophenoxy, carbo-t-butoxy, N,N-dimethylcarboamide, N-phenylcarboamide, N-t-butylcarboamide, N-cyclohexyl-carboamide, methyl, t-butyl, hexyl, cyclohexyl, phenyl, naphthyl and 2-(4′-isopropoxyphenyl)-2-propyl. Groups having secondary or tertiary or ring structure such as carbo-t-butoxy, N-phenylcarboamide, N-t-butylcarboamide, N-cyclohexylcarboamide, t-butyl, cyclohexyl, phenyl, naphthyl, 2-(4′-isopropoxyphenyl)-2-propyl are particularly preferred.

As specific examples for the triazole group in (iv) above, there can be mentioned benzotriazoyl and naphthotriazoyl. Substituted or un-substituted benzotriazoyl is particularly preferred. As specific examples of oxazoyl, there can be mentioned 2-oxazoyl, 4-oxazoyl and 5-oxazoyl; 2-oxazoyl is particularly preferred. As specific examples of thiazoyl, there can be mentioned 2-thiazoyl, 4-thiazoyl and 5-thiazoyl; 2-thiazoyl is particularly preferred.

Among the non-ionic groups (i) - (iv) described above, particularly preferred are the substituent groups contained in (i), acyl groups in (ii), alkoxycarbonyl groups and carboamide groups in (iii) and triazole groups in (iv).

These non-ionic groups may be bonded to any chemically possible position on the aromatic ring. For instance, in the case of 5-phenyl-2-naphthol, there can be mentioned 1, 3, 4, 6, 7, 8, 2′, 3′ and 4′-positions. However, among various positions of bonding, it is preferred that the non-ionic group is directly bonded to the same ring that the phenolic hydroxyl group is bonded. That is, in the case of 5-phenyl-2-naphthol, there can be mentioned, for example, 1, 3, 4, 6, 7, 8-positions. Further, it is most preferred that the non-ionic group is bonded at the position adjacent to the phenolic hydroxyl group. In this case, the position adjacent to the phenolic hydroxyl group means the position of a carbon atom bonded to the carbon atom to which the phenolic hydroxyl group is bonded; for example, 1,3-positions are most preferred in the case of 5-phenyl-2-naphthol.

As specific examples of substituted phenols, there can be mentioned methylphenol, butylphenol, phenylphenol, cyanophenol, formylphenol, acetylphenol, benzoylphenol, hexanoylphenol, nitrophenol, cyanonaphthol, formylnaphthol, nitronaphthol, acetylnaphthol, nitrosonaphthol, acetylnaphthol, phenyl-4-hydroxyphenyl ketone, phenyl-2-hydroxyphenyl ketone, phenyl-4-hydroxyphenyl sulfone, phenyl-2-hydroxyphenyl sulfone, 3,3-bis(4-hydroxyphenyl) propane, bis(4-hydroxy-phenyl) methane, bis(4-hydroxyphenyl) sulfone, bis(2-hydroxyphenyl) sulfone, bis(4-hydroxyphenyl) ketone, bis(2-hydroxyphenyl) ketone, bis(2-hydroxy-4-methoxyphenyl) ketone, bis(4-hydroxyphenyl) sulfide, 2-carbomethoxyphenol, 2-carboethoxyphenol, 4-carboethoxyphenol, 2-carbopropoxy-phenol, 4-carbopropoxyphenol, 2-carbobutoxyphenol, 4-carbobutoxyphenol, N-phenylcarboamide phenol carboethoxyphenol, carbopropoxyphenol, carbobutoxyphenol, hydroxybenzophenone, dihydroxybenzophenone, (hydroxyphenol)benzotriazole and phenol containing benzotriazole as shown in the general formulae (1) - (11).

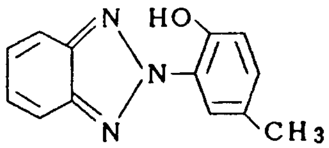

(1)

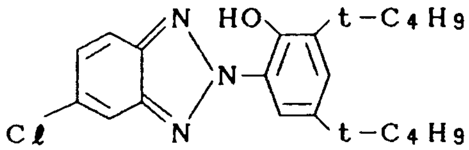

(2)

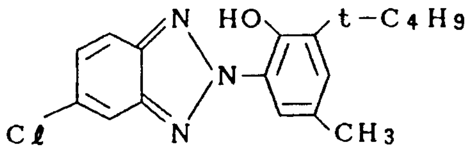

(3)

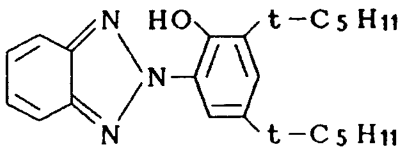

(4)

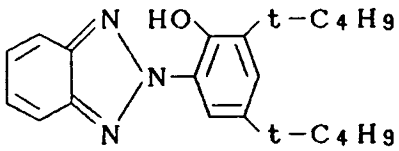

(5)

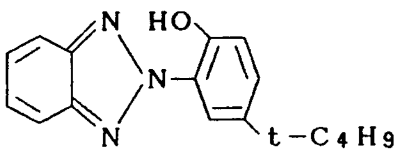

(6)

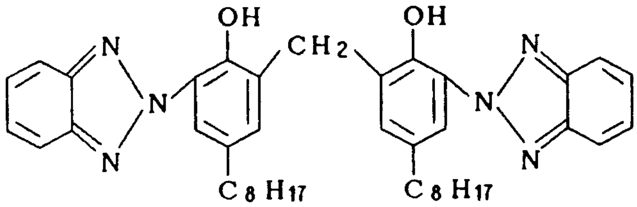

(7)

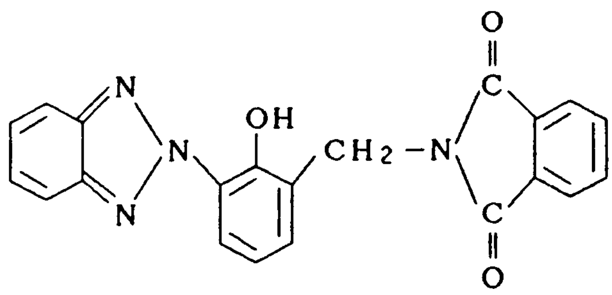

(8)

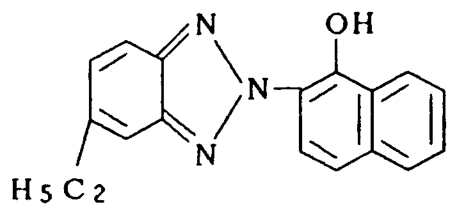

(9)

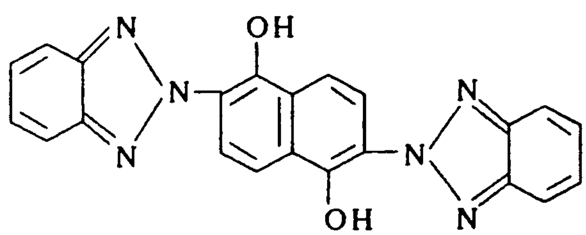

(10)

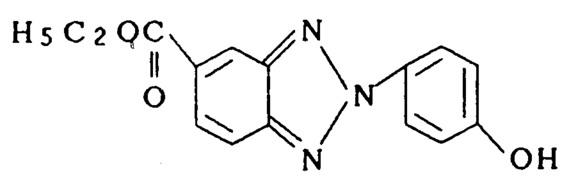

(11)

Among them, preferred are 2-t-butylphenol, 2-phenylphenol, 2-cyanophenol, 4-cyanophenol, 2-nitrophenol, 4-nitrophenol, 1-cyano-2-naphthol, 3-cyano-2-naphthol, 2-cyano-1-naphthol, 1-nitro-2-naphthol, 2-nitro-1-naphthol, 2-formylphenol, 2-acetylphenol, 1-formyl-2-naphthol, 2-formyl-1-naphthol, 1-acetyl-2-naphthol, 2-acetyl-1-naphthol, phenyl-4-hydroxyphenyl sulfone, phenyl-2-hydroxyphenyl sulfone, phenyl-4-hydroxyphenyl ketone, phenyl-2-hydroxyphenyl ketone, bis(2-hydroxyphenyl) ketone, bis(2-hydroxy-4-methoxyphenyl) ketone, 4-carboethoxyphenol, 4-carbopropoxyphenol, 4-carbobutoxyphenol, N-phenylcarbo-amidophenol and phenols containing benzotriazole group as shown in the general formulae (1) - (8). Among them, 2-cyanophenol, 2-nitrophenol, 1-nitro-2-naphthol, 2-nitro-1-naphthol, 2-formylphenol, 2-acetylphenol, 1-formyl-2-naphthol, 2-formyl-1-naphthol, bis(2-hydroxy-4-methoxyphenyl) ketone, 4-carbopropoxyphenol, N-phenylcarboamide phenol and phenols containing benzotriazole groups represented by the general formula (1) - (6) can be mentioned as particularly preferred examples.

There is no particular restriction on the metal salts of substituted phenols used in the present invention, so long as hydrogen atoms of hydroxyl groups of the substituted phenols are substituted with metal atoms, As metals, there can be mentioned, for example, alkali metals such as lithium, sodium and potassium, alkaline earth metals such as beryllium, magnesium, calcium, strontium and barium, as well as amphoteric metals such as aluminium, zinc and iron, and transition metals. Among them, alkali metal and alkaline earth metals are used preferably and alkali metals, in particular sodium, are most preferred.

The amount of the metal salt of the substituted phenols in the present invention is from 0.005 to 10 parts by weight, preferably, from 0.01 to 5 parts by weight and, more preferably, from 0.1 to 3 parts by weight based on 100 parts by weight of the thermoplastic polyester. If the amount is not greater than 0.005 parts by weight, the effect for improving the crystallization rate of the thermoplastic polyester is not sufficient, whereas if it exceeds 10 parts by weight, heat resistance, melt degradation stability, etc. become insufficient.

Combined use of various organic acid salts or inorganic compounds which are known as moldability improvers for thermoplastic polyesters such as polyethylene terephthalate in addition to the metal salts according to the present invention is also preferred in view of the improvement in moldability. As specific examples of these compounds, there can be mentioned, for example, stearates such as sodium stearate and barium stearate, sodium salts or barium salts of partially saponified montanic acid esters, sodium salts of $\beta$-diketones and talc.

Further, moldability can be improved by adding a crystallization promoter used for thermoplastic polyesters such as polyethylene terephthalate to the compositions according to the present invention. As specific examples of such crystallization promotors, there can be mentioned, for example, polyalkylene glycols such as polyethylene glycol and polypropylene glycol or carboxylic acid diesters thereof, polyalkylene glycol-$\alpha$,$\omega$-dialkylethers such as polyethylene glycol-$\alpha$-$\omega$-dialkylether or polypropylene glycol-$\alpha$,$\omega$-dialkylether, benzoic acid esters such as neopentyl glycol dibenzoate, aliphatic polyesters such as polycaprolactone, polyethylene adipate and polybutylene adipate.

Further, by adding fibrous and/or granular fillers to the composition according to the present invention, the rigidity can remarkably be improved without reducing other physical properties, although this is not essential. As such fillers, there can be mentioned glass fibers, carbon fibers, metal fibers, aramide fibers, asbesto, potassium titanate whisker, wollastonite, glass flakes, glass beads, talc, mica, clay, calcium carbonate, barium sulfate, titanium oxide and aluminium oxide. Among them, chopped two strand type glass fibers, talc and titanium oxide are used preferably, The amount of the fillers added is usually not greater than 120 parts by weight based on 100 parts by weight of the thermoplastic polyesters.

Furthermore, one or more of usual additives such as antioxidants, heat stabilizers, UV-absorbers, antistatic agents, lubricants, mold releasing agents, colorants including dyes and pigments, on flame retardants, may be added to the compositions according to the present invention in an amount not impairing the object of the present invention.

Further, it is also possible to add a small amount of thermoplastic resin, for example, polycarbonate, polyamide, polyphenylene oxide, polyethylene, polypropylene, ethylene/propylene copolymer, ethylene/butene-1 copolymer, ethylene/propylene/non-conjugated diene copolymer, ethylene/ethyl acrylate copolymer, ethylene/glycidyl methacrylate copolymer, ethylene/vinyl acetate/glycidyl methacrylate copolymer or ethylene/propylene-g-maleic acid anhydride copolymer.

Although there is no particular restriction on the method of producing the compositions according to the present invention, there can be mentioned, preferably, the method of melt-mixing thermoplastic polyester and metal salt of substituted phenol by using an extruder and the method of adding the metal salt of substituted phenol during or at the final stage of the polymerization of the thermoplastic polyester. In the case of adding inorganic fillers or other additives, it is preferred, that they are melt-blended together with both of the components as described above by using an extruder.

The resin composition according to the present invention can be molded easily by a usual method such as injection molding, extrusion molding, blow molding or vacuum forming and the resultant molded products show excellent properties.

The present invention is to be explained more specifically referring to the examples, but the invention is not restricted to them. In these examples, the intrinsic viscosity was measured in o-chlorophenol at 25°C.

Examples 1 - 17, Comparative Examples 1 - 5

Additives A-R shown below were blended at each of the ratios shown in Table 1 based on 100 parts by weight of polyethylene terephthalate (PET) with an intrinsic viscosity of 0.83 dl/g and melt-blended into pellets by a twin screw extruder of 30 mmØ set to 280°C.

The resultant polyethylene terephthalate composition was subjected to differential thermal analysis by using a differential scanning calorimeter manufactured by Perkin Elmer Co., and crystallization temperature on heating and crystallization temperature on cooling were measured and the crystallization rate was evaluated. As is well-known generally, since the crystallization rate is improved along with the increase of the crystallization temperature on cooling and along with the lowering of the crystallization temperature upon heating, $\Delta T$ defined as : $\Delta T$ = (crystallization temperature on cooling) - (crystallization temperature on

heating) was used as a measure for the crystallization rate.

The intrinsic viscosity of the resultant pellets was measured to evaluate the reduction of the molecular weight upon production of the thermoplastic polyester resin composition.

To evaluate melt degradation stability, the meltflow rate (MFR) after staying in a melt indexer (2 mmØ nozzle, 10 mm length, 5 kg load) at 280°C for 6 min and 20 min was measured. If the MFR rapidly increases, this indicates a remarkable reduction of the molecular weight of the polyester, and thus corresponds to low melt degradation stability.

The results are shown in Table 1.

(Additives)

A :

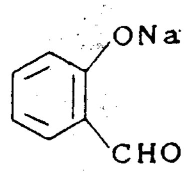

B :

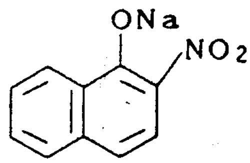

C :

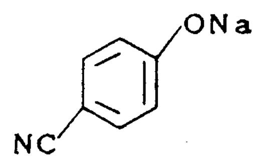

D :

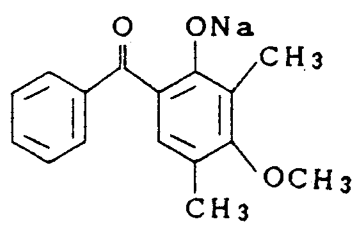

E :

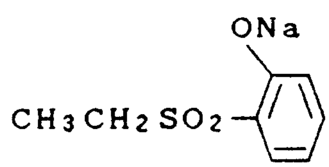

F :

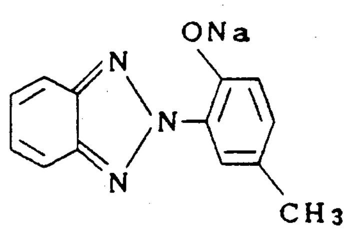

G :

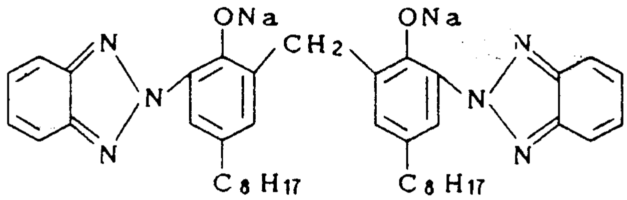

H :

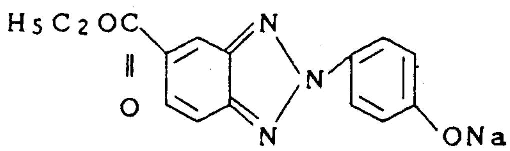

I :

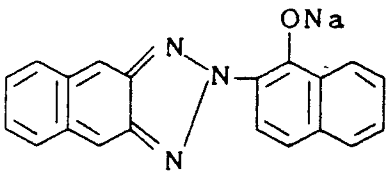

J :

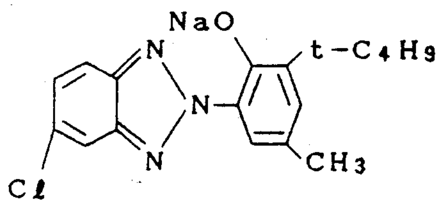

K :

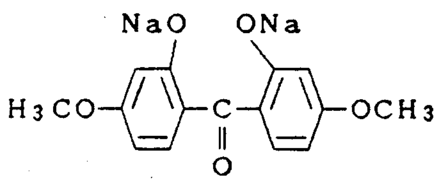

L :

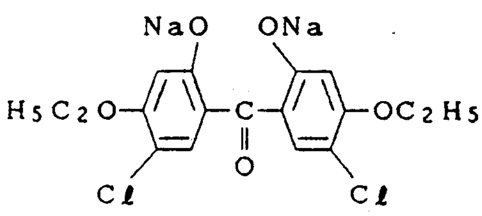

M :

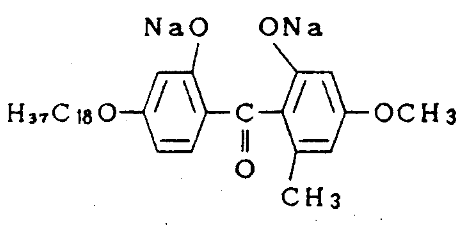

N :

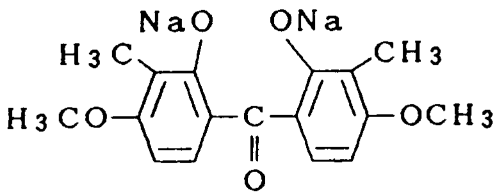

O :

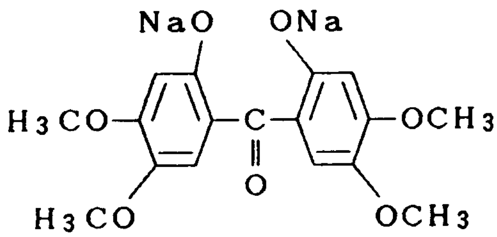

P :

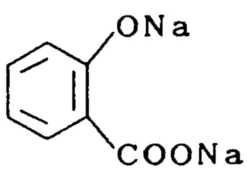

Q :

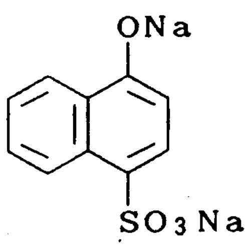

R :

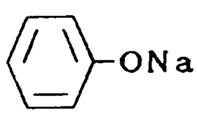

Table 1

| | | Additive | | ΔT (°C) | Intrinsic viscosity (dl/g) | MFR (g/10 min) | |
|---|---|---|---|---|---|---|---|
| | | Type | Amount (parts) | | | 6 min | 20 min |
| Example | 1 | A | 0.1 | 80 | 0.81 | 21 | 32 |
| | 2 | A | 0.5 | 85 | 0.79 | 26 | 39 |
| | 3 | A | 2.0 | 94 | 0.77 | 27 | 42 |
| | 4 | B | 0.5 | 80 | 0.75 | 32 | 47 |
| | 5 | C | 0.5 | 83 | 0.73 | 34 | 49 |
| | 6 | D | 0.5 | 81 | 0.78 | 27 | 44 |
| | 7 | E | 0.5 | 83 | 0.78 | 27 | 42 |
| | 8 | F | 0.5 | 85 | 0.78 | 27 | 43 |
| | 9 | G | 0.5 | 83 | 0.79 | 25 | 40 |
| | 10 | H | 0.5 | 83 | 0.75 | 33 | 48 |
| | 11 | I | 0.5 | 81 | 0.79 | 25 | 41 |
| | 12 | J | 0.5 | 82 | 0.79 | 26 | 40 |
| | 13 | K | 0.5 | 85 | 0.75 | 33 | 47 |
| | 14 | L | 0.5 | 83 | 0.76 | 32 | 46 |
| | 15 | M | 0.5 | 82 | 0.76 | 33 | 45 |
| | 16 | N | 0.5 | 83 | 0.75 | 33 | 46 |
| | 17 | O | 0.5 | 83 | 0.73 | 34 | 50 |
| Comparative Example | 1 | - | - | 58 | 0.81 | 20 | 31 |
| | 2 | A | 0.001 | 61 | 0.81 | 20 | 31 |
| | 3 | P | 0.5 | 77 | 0.62 | 53 | 120 |
| | 4 | Q | 0.5 | 64 | 0.65 | 49 | 135 |
| | 5 | R | 0.5 | 66 | 0.56 | 65 | >200 |

Examples 18 - 20, Comparative Example 6

The additives A, F and K were blended at the ratio shown in Table 2 to 100 parts by weight of polycyclohexane dimethylene terephthalate (PCT) with intrinsic viscosity of 0.94 dl/g, melt-blended in a twin screw extruder of 30 mmØ set to 305°C, and cut into pellets.

The resultant pellets were evaluated in the same manner as those in Example 1 except for setting the MFT measuring temperature to 305°C. Further, the same evaluation was also conducted for those without additive (A).

These results are shown in Table 2.

Table2

| | | Additive | | ΔT (°C) | Intrinsic viscosity (dl/g) | MFR (g/10 min) | |
|---|---|---|---|---|---|---|---|
| | | Type | Amount (part) | | | 6 min | 20 min |
| Example | 18 | A | 0.5 | 92 | 0.91 | 26 | 44 |
| | 19 | F | 0.5 | 90 | 0.91 | 28 | 47 |
| | 20 | K | 0.5 | 93 | 0.90 | 27 | 46 |
| Comparative Example | 6 | - | - | 65 | 0.93 | 25 | 43 |

Examples 21 - 35, Comparative Examples 7 - 10

30 parts of chopped strand type glass fiber (3 mm length, 11 μm diameter), and various additives (A) - (R) were blended at the ratios indicated in Table 3 to 100 parts by weight of polyethylene terephthalate having an intrinsic viscosity of 0.60 dl/g, melt-blended by using a twin screw extruder of 30 mmØ set to

280 ° C, and cut into pellets.

For the resultant polyethylene terephthalate compositions, differential thermal analysis was carried out in the same manner as in Example 1 to evaluate the crystallization rate.

The polyethylene terephthalate resin composition obtained by melt-blending was dissolved in 0-chlorophenol and, after separating glass fibers by using a centrifugator, the solution was poured into methanol to obtain a polymer not containing glass fibers. The intrinsic viscosity of the resultant polymer was measured, and the molecular weight reduction upon producing the resin composition in the presence of glass fibers was evaluated.

After drying the pellets at 155 ° C for 5 hours in vacuum, box-like specimens each of 40 mm length, 60 mm width, 20 mm depth and 2 mm wall thickness were molded by using a screw in-line type injection molder set to 280 ° C, at a mold clamping pressure of 75t and under the conditions of injection period/cooling period/intermediate period : 15 sec/20 sec/5sec, and mold temperature of 85 ° C, and the force required for releasing the molded product from the mold (mold releasing force) was determined.

Under the same injection molding conditions as descrided above, ASTM-No. 1 dumbbells were molded and tensile properties were measured in accordance with ASTM D-638.

The tensile strength of the dumbbell, after immersed in water at 85 ° C for 500 hours, was measured and the retention ratio, which is defined as the ratio of the tensile strength after the treatment to the original value, was determined.

These results are shown in Table 3.

Table 3

| Example | | Additive Kind | Additive Amount (parts) | ΔT (℃) | Intrinsic viscosity (dl/g) | Mold releasing force (kgf) | Tensile Strength (kgf/cm$^2$) | Elongation at break (%) | After immersing in water at 85℃, 500 hr: Tensile strength (kgf/cm$^2$) | After immersing in water at 85℃, 500 hr: Elongation at break (%) | After immersing in water at 85℃, 500 hr: Tensile stregth retention ratio (%) |
|---|---|---|---|---|---|---|---|---|---|---|---|
| Example | 21 | A | 0.5 | 96 | 0.55 | 47 | 1550 | 3.0 | 1270 | 2.5 | 82 |
| | 22 | B | 0.5 | 96 | 0.56 | 44 | 1560 | 3.1 | 1310 | 2.6 | 84 |
| | 23 | C | 0.5 | 93 | 0.55 | 49 | 1520 | 3.2 | 1260 | 2.7 | 83 |
| | 24 | D | 0.5 | 94 | 0.56 | 50 | 1520 | 3.1 | 1290 | 2.6 | 85 |
| | 25 | E | 0.5 | 96 | 0.57 | 43 | 1530 | 3.0 | 1290 | 2.5 | 84 |
| | 26 | F | 0.5 | 97 | 0.57 | 44 | 1560 | 3.0 | 1330 | 2.6 | 85 |
| | 27 | G | 0.5 | 95 | 0.58 | 46 | 1540 | 3.1 | 1290 | 2.5 | 84 |
| | 28 | H | 0.5 | 94 | 0.55 | 48 | 1510 | 3.0 | 1300 | 2.3 | 86 |
| | 29 | I | 0.5 | 94 | 0.56 | 50 | 1520 | 3.1 | 1310 | 2.5 | 87 |
| | 30 | J | 0.5 | 95 | 0.57 | 48 | 1530 | 3.1 | 1320 | 2.4 | 86 |
| | 31 | K | 0.5 | 97 | 0.55 | 43 | 1530 | 3.0 | 1300 | 2.6 | 85 |
| | 32 | L | 0.5 | 94 | 0.56 | 45 | 1520 | 3.1 | 1280 | 2.6 | 84 |
| | 33 | M | 0.5 | 93 | 0.54 | 43 | 1530 | 3.1 | 1220 | 2.5 | 80 |
| | 34 | N | 0.5 | 94 | 0.53 | 41 | 1530 | 3.0 | 1270 | 2.5 | 83 |
| | 35 | O | 0.5 | 95 | 0.52 | 45 | 1510 | 3.0 | 1240 | 2.5 | 82 |
| Comparative Example | 7 | - | - | 62 | 0.58 | >200 | 1260 | 3.0 | 600 | 1.7 | 48 |
| | 8 | P | 0.5 | 79 | 0.43 | 140 | 1390 | 1.8 | 580 | 1.4 | 42 |
| | 9 | Q | 0.5 | 68 | 0.48 | 180 | 1350 | 2.1 | 540 | 1.4 | 40 |
| | 10 | R | 0.5 | 70 | 0.42 | 140 | 1300 | 1.7 | 494 | 1.2 | 38 |

Examples 36 - 41

Various additives shown in Table 4, together with 0.5 parts of the above-mentioned additive A, were melt blended at the ratio shown in Table 4 with 100 parts by weight of polyethylene terephthalate having an intrinsic viscosity of 0.83 dl/g in a twin screw extruder with 30 mmØ, set to 280 ° C, and water cooled, and then pelletized.

Differential thermal analysis was conducted in the same manner at the resultant polyethylene terephthalate compositions to evaluate the crystallization rate. Further, the intrinsic viscosity of the pellets was measured, which was used as a measure for the molecular weight reduction upon producing the thermoplastic polyester resin compositions.

The results are shown in Table 4.

Table 4

| Example | Additive Kind | Amount added | ΔT (℃) | Intrinsic viscosity (dl/g) |
|---|---|---|---|---|
| 36 | polyethylene glycol-α,ω-dimethyl ether (molecular weight: 1000) | 3 parts | 98 | 0.70 |
| 37 | propylene glycol-α,ω-dimethyl ether (molecular weight: 1000) | 3 parts | 99 | 0.71 |
| 38 | polybutylene adipate (molecular weight: 2000) | 3 parts | 95 | 0.68 |
| 39 | polycaprolactone (molecular weight: 2000) | 3 parts | 94 | 0.67 |
| 40 | Talc | 0.5 parts | 89 | 0.78 |
| 41 | 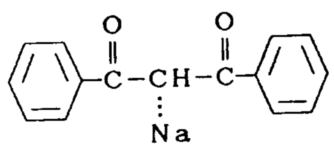 | 0.5 parts | 90 | 0.75 |

## Claims

1. A polyester composition comprising 100 parts by weight of a thermoplastic polyester and 0.005 to 10 parts by weight of an additive which is a metal salt of a substituted phenol having at least one aromatic ring, at least one hydroxyl group, in the form of a metal salt, bonded to said aromatic ring, at least one further substituent in the form of a non-ionic group bonded to said aromatic ring, with the proviso that none of said further substituents contains any ionic group.

2. A composition as defined in claim 1, wherein the thermoplastic polyester essentially comprises an aromatic dicarboxylic acid with 8 to 20 carbon atoms and at least one diol selected from aliphatic diols and cycloaliphatic diols with 2 to 10 carbon atoms.

3. A composition as defined in claim 1, wherein the thermoplastic polyester is selected from the group consisting of polyethylene terephthalate, polybutylene terephthalate, polyethylene-2,6-naphthalate and poly-1,4-cyclohexane dimethylene terephthalate.

4. A composition as defined in claim 1, wherein the intrinsic viscosity of the thermoplastic polyester is within a range from 0.25 to 3.0 dl/g.

5. A composition as defined in claim 1, wherein said aromatic ring is selected from benzene, naphthalene, phenanthrene, anthracene, pyrene, pyridine, triazine, furane, quinoline and isoquinoline.

6. A composition as defined in claim 1, wherein said non-ionic group is at least one selected from cyano group, nitro group, formyl group, acyl group, alkoxycarbonyl group, carboamide group, sulfonyl group, triazole group, oxazole group, thiazole group and hydrocarbon group having 1 to 20 carbon atoms.

7. A composition as defined in claim 1, wherein said metal is at least one selected from the group consisting of alkali metal, alkaline earth metal, aluminium and zinc.

8. A composition as defined in claim 7, wherein said metal is at least one selected from the group consisting of lithium, sodium, potassium, calcium and barium.

9. A composition as defined in claim 1, wherein said phenolic hydroxyl group in the form of a metal salt and said non-ionic group are directly bonded to the same ring.

10. A composition as defined in claim 1, wherein said substituted phenol is selected from formyl-phenol, nitrophenol, carboethoxyphenol, carbopropoxyphenol, carbobutoxyphenol, N-phenylcarboamidophenol,hydroxybenzophenone, dihydroxybenzophenone and (hydroxyphenyl) benzotriazole.

11. A composition as defined in claim 1, wherein the amount of said additive is from 0.01 to 5 parts by weight based on 100 parts by weight of the thermoplastic polyester.

## Patentansprüche

1. Polyester-Zusammensetzung, die 100 Gew.-Teile eines thermoplastischen Polyesters und 0,005 bis 10 Gew.-Teile eines Zusatzes umfaßt, der ein Metallsalz eines substituierten Phenols ist, das mindestens einen aromatischen Ring, mindestens eine Hydroxylgruppe in Form eines Metallsalzes, die mit dem aromatischen Ring verbunden ist, mindestens einen weiteren Substituenten in Form einer nichtionischen Gruppe aufweist, der mit dem aromatischen Ring verbunden ist, vorausgesetzt, daß keiner der weiteren Substituenten eine ionische Gruppe enthält.

2. Zusammensetzung nach Anspruch 1, wobei der thermoplastische Polyester im wesentlichen eine aromatische Dicarbonsäure mit 8 bis 20 Kohlenstoffatomen und mindestens ein Diol umfaßt, das aus aliphatischen Diolen und cycloaliphatischen Diolen mit 2 bis 10 Kohlenstoffatomen ausgewählt ist.

3. Zusammensetzung nach Anspruch 1, wobei der thermoplastische Polyester aus der Gruppe ausgewählt ist, die aus Polyethylenterephthalat, Polybutylenterephthalat, Polyethylen-2,6-naphthalat und Poly-1,4-cyclohexandimethylenterephthalat besteht.

4. Zusammensetzung nach Anspruch 1, wobei die Strukturviskosität des thermoplastischen Polyesters im Bereich von 0,25 bis 3,0 dl/g liegt.

5. Zusammensetzung nach Anspruch 1, wobei der aromatische Ring aus Benzol, Naphthalin, Phenanthren, Anthracen, Pyren, Pyridin, Triazin, Furan, Chinolin und Isochinolin ausgewählt ist.

6. Zusammensetzung nach Anspruch 1, wobei die nichtionische Gruppe mindestens eine Gruppe ist, die ausgewählt ist aus einer Cyanogruppe, einer Nitrogruppe, einer Formylgruppe, einer Acylgruppe, einer Alkoxycarbonylgruppe, einer Carboamidgruppe, einer Sulfonylgruppe, einer Triazolgruppe, einer Oxazolgruppe, einer Thiazolgruppe und einer Kohlenwasserstoffgruppe mit 1 bis 20 Kohlenstoffatomen.

7. Zusammensetzung nach Anspruch 1, wobei das Metall mindestens ein Metall ist, das aus der Gruppe ausgewählt ist, die aus Alkalimetall, Erdalkalimetall, Aluminium und Zink besteht.

8. Zusammensetzung nach Anspruch 7, wobei das Metall zumindest ein Metall ist, das aus der Gruppe ausgewählt ist, die aus Lithium, Natrium, Kalium, Calcium und Barium besteht.

**9.** Zusammensetzung nach Anspruch 1, wobei die phenolische Hydroxylgruppe in Form eines Metallsalzes und die nichtionische Gruppe direkt an denselben Ring gebunden sind.

**10.** Zusammensetzung nach Anspruch 1, wobei das substituierte Phenol aus Formylphenol, Nitrophenol, Carboethoxyphenol, Carbopropoxyphenol, Carbobutoxyphenol, N-Phenylcarboamidophenol, Hydroxybenzophenon, Dihydroxybenzophenon und (Hydroxyphenyl)benzotriazol ausgewählt ist.

**11.** Zusammensetzung nach Anspruch 1, wobei die Menge des Zusatzes 0,01 bis 5 Gew.-Teile auf der Basis von 100 Gew.-Teilen des thermoplastischen Polyesters beträgt.

## Revendications

**1.** Composition de polyester comprenant 100 parties en poids d'un polyester thermoplastique et 0,005 à 10 parties en poids d'un additif qui est un sel métallique d'un groupe phénol substitué ayant au moins un cycle aromatique, au moins un groupe hydroxyle, sous la forme d'un sel métallique, lié audit cycle aromatique, au moins un autre substituant sous la forme d'un groupe non-ionique lié audit cycle aromatique, à condition qu'aucun desdits autres substituants ne contienne un groupe ionique quelconque.

**2.** Composition selon la revendication 1, dans laquelle le polyester thermoplastique comprend essentiellement un acide dicarboxylique aromatique avec 8 à 20 atomes de carbone et au moins un diol choisi parmi les diols aliphatiques et les diols cycloaliphatiques avec 2 à 10 atomes de carbone.

**3.** Composition selon la revendication 1, dans laquelle le polyester thermoplastique est choisi dans le groupe constitué du polytéréphtalate d'éthylène, du polytéréphtalate de butylène, du polyéthylène-2,6-naphtalate et du poly-1,4-cyclohexane diméthylène téréphtalate.

**4.** Composition selon la revendication 1, dans laquelle la viscosité intrinsèque du polyester thermoplastique est dans la gamme de 0,25 à 3,0 dl/g.

**5.** Composition selon la revendication 1, dans laquelle ledit cycle aromatique est choisi parmi le benzène, le naphtalène, le phénanthrène, l'anthracène, le pyrène, la pyridine, la triazine, le furane, la quinoline et l'isoquinoline.

**6.** Composition selon la revendication 1, dans laquelle ledit groupe non-ionique est au moins un groupe choisi parmi les groupes cyano, nitro, formyle, acyle, alcoxycarbonyle, carboamide, sulfonyle, triazole, oxazole, thiazole et hydrocarbone ayant 1 à 20 atomes de carbone.

**7.** Composition selon la revendication 1, dans laquelle ledit métal est au moins un métal choisi dans le groupe constitué des métaux alcalins, des métaux alcalino-terreux, de l'aluminium et du zinc.

**8.** Composition selon la revendication 7, dans laquelle ledit métal est au moins un métal choisi dans le groupe constitué du lithium, du sodium, du potassium, du calcium et du baryum.

**9.** Composition selon la revendication 1, dans laquelle ledit groupe hydroxyle phénolique sous la forme d'un sel métallique et ledit groupe non-ionique sont directement liés au même cycle.

**10.** Composition selon la revendication 1, dans laquelle ledit phénol substitué est choisi parmi les : formylphénol, nitrophénol, carboéthoxyphénol, carbopropoxyphénol, carbobutoxyphénol, N-phénylcarboamidophénol, hydroxybenzophénone, dihydroxybenzophénone et (hydroxyphényl) benzotriazole.

**11.** Composition selon la revendication 1, dans laquelle la quantité dudit additif est comprise entre 0,01 et 5 parties en poids par rapport à 100 parties en poids du polyester thermoplastique.